# EUROPEAN PATENT SPECIFICATION

(11) **EP 4 665 138 B1**
(45) Date of publication and mention of the grant of the patent: **19.08.2026**
(21) Application number: 24703048.9
(22) Date of filing: 05.02.2024
(51) Int. Cl.: A01K 1/00, A01K 15/02, A01K 31/00, A01K 1/02, A01K 1/03

(54) **A LIGHTING SYSTEM FOR ILLUMINATING AN AGRICULTURAL ENVIRONMENT**
BELEUCHTUNGSSYSTEM ZUR BELEUCHTUNG EINER LANDWIRTSCHAFTLICHEN UMGEBUNG
SYSTÈME D'ÉCLAIRAGE POUR ÉCLAIRER UN ENVIRONNEMENT AGRICOLE

(30) Priority: 13.02.2023 US 202363445109 P; 28.03.2023 EP 23164643
(43) Date of publication of application: 24.12.2025
(73) Proprietor: Signify Holding B.V., 5656 AE Eindhoven (NL)
(72) Inventor: TIEBERG, Jack, 5656 AE Eindhoven (NL); STEPHAN, Aaron, Benjamin, 5656 AE Eindhoven (NL); DE SAMBER, Marc, Andre, 5656 AE Eindhoven (NL); LEYK, Curtis, Allen, 5656 AE Eindhoven (NL); BROERS, Harry, 5656 AE Eindhoven (NL); SEKULOVSKI, Dragan, 5656 AE Eindhoven (NL)
(74) Representative: Verweij, Petronella Daniëlle
(86) International application number: PCT/EP2024/052775
(87) International publication number: WO 2024/170323

(56) References cited:
- WO-A1-2021/094864
- US-B1- 11 439 126

## Description

### FIELD OF THE INVENTION

The invention relates to a lighting system for illuminating an agricultural environment. The invention further relates to a corresponding method of illuminating an agricultural environment. The invention further relates to a poultry coop; and to a luminaire for projecting at least one light beam within an agricultural environment.

### BACKGROUND OF THE INVENTION

Even though poultry farming is traditionally driven by economics of scale and optimizing production efficiency, the topic of animal health and wellbeing is getting more and more traction within modem poultry farming. It is found that improved animal health and wellbeing has a positive outcome on commodities produced from raising poultry (such as for example eggs, feathers, and/or meat).

One known mechanism for improving the health and wellbeing of poultry is to encourage movement or exercise for the poultry. This may be of particular relevance to broiler chicken, for example, because commercial broiler chicken have been genetically selected for fast growth and heavy breast muscles. This combination leads to a phenotype in which the birds grow large very fast, inevitably resulting in increased leg/mobility issues.

One solution for encouraging broiler chicken movement or exercise is environmental enrichment, a concept wherein light spots (e.g. laser light spots) are projected on a poultry coop bedding, either stationary or moving, so as to render a (curious) response from the broiler chicken, that gets the broiler chicken moving. See e.g.: Meyer, M. M., A. K. Johnson, and E. A. Bobeck. 2019. "A Novel Environmental Enrichment Device Improved Broiler Performance without Sacrificing Bird Physiological or Environmental Quality Measures." Poultry Science 98 (11): 5247-56. See also US11439126B1, disclosing a laser device used to stimulate poultry's natural predatory and visual oriented instincts.

It is also noted that modem poultry farming makes more and more use of dynamic lighting systems, which can dynamically control the intensity, spectrum, schedule, and/or distribution of artificial light within the agricultural environment, in order to improve animal health and wellbeing with ambient illumination. For example, illuminating the agricultural environment with an animal light scene, e.g. to reduce stress at the animal, mimic a natural habitat, provide behavioral light to reduce pecking behavior, encourage feeding by improving feed visibility, etc. Such a dynamic lighting system may for example be the Signify-ONCE NatureDynamics system.

Individually, environmental enrichment with laser spots and illumination provided by dynamic lighting systems are both beneficial for animal health and wellbeing. However, the effectiveness of the projected laser spots of the environmental enrichment may be negatively affected, if the environment is already being illuminated by another dynamic lighting system interfering with the lighting properties of the laser spots. Hence, there is clear desire to maximize the individual effects of different (co-existing) lighting systems for improving the health and wellbeing of poultry.

### SUMMARY OF THE INVENTION

It is an object of the invention to provide an improved lighting system, which at least alleviates the problems and disadvantages mentioned above. Thereto, the invention provides, a lighting system according to claim 1 for illuminating an agricultural environment, wherein the lighting system comprises: a first lighting unit configured to illuminate the agricultural environment with a first light having a first light characteristic; a second lighting unit configured to project at least one dynamic light beam, wherein each dynamic light beam has a beam divergence of less than 15 degrees and creates a moving light spot within the agricultural environment; a controller for controlling the second lighting unit, wherein the controller is configured to: (i) obtain a signal indicative of the first light characteristic of the first light, (ii) determine a second light characteristic substantially different from the first light characteristic in response to the signal; (iii) control the second lighting unit to project the at least one dynamic light beam with said second light characteristic; wherein the first light characteristic comprises a first light spectrum; wherein the second light characteristic comprises a second light spectrum; wherein a wavelength of at least one a dominant peak of the second light spectrum is at least 30 nm different from a wavelength of at least one dominant peak of the first light spectrum.

Hence, the invention provides a lighting system according to claim 1 for illuminating an agricultural environment, the lighting system comprising a first lighting unit, a second lighting unit, and a controller. The controller may be communicatively coupled to the first lighting unit and the second lighting unit.

The first lighting unit illuminates the agricultural environment with a first light having a first light characteristic. The first light characteristic of the first light may (be chosen such to) improve the health and wellbeing of at least one animal (e.g. poultry) in the agricultural environment. For example, the first light may comprise an animal light recipe.

The second lighting unit is configured to project at least one light beam within the agricultural environment. Each light beam has a beam divergence of less than 15 degrees and creates a light spot within the agricultural environment. The projected at least one beam may render the concept environmental enrichment, and as mentioned, thereby improve animal health and wellbeing.

However, the lighting properties of the at least one light beam (and the resulting light spot in the agricultural environment), such as for example the visibility thereof, may determine the effectiveness of the environmental enrichment, and the propensity of an animal (e.g. poultry) to move towards (and/or away from) light spots created by the projected at least one light beam. Such visibility improves when sufficient difference (or: contrast) exists between the at least one light beam (and the resulting light spot in the agricultural environment) and the illumination (conditions) in the agricultural environment, namely the first light having the first light characteristic.

Therefore, the invention provides a controller configured to control the second lighting unit, wherein the controller is configured to obtain a signal indicative of the first light characteristic of the first light. Moreover, the controller is configured to determine a second light characteristic in response to said signal, wherein the second light characteristic is substantially different from (or: contrasting with, or: distinguishable from) the first light characteristic. The controller is further configured to control the second lighting unit to project the at least one light beam with said second light characteristic.

As a result, the controller determines a second light characteristic, such that the projected at least one light beam comprising said second light characteristic will be substantially different from (or: contrasting with, or: distinguishable from) the first light characteristic, thereby improving the visibility of the projected at least one light beam within the agricultural environment relative to the first light illuminating the agricultural environment with the first light characteristic.

Thus, the present invention provides for the properties of the at least one light beam of the second lighting unit to be controlled based on, or in dependence of, the properties of the first light of the first lighting unit.

Hence, the lighting system according to the invention improves the enrichment caused by the second lighting unit projecting at least one light beam within the agricultural environment, thereby promoting the advantages of enrichment, while the first light illuminating the environmental environment (e.g. with an animal light scene) remains effective for animal health and wellbeing as well. The present invention maximizes the individual effects of both lighting units, and/or finds a best compromise between the two.

While previous concepts of environmental enrichment make use of predetermined and fixed settings for the properties of the (laser) light beam, the present invention advantageously provides that the properties of environmental enrichment within an agricultural environment are no longer predetermined and fixed, but made dependent on the properties of a first light (already) illuminating the agricultural environment, thereby enabling co-existence and coordination between different lighting units.

As mentioned, the at least one light beam is at least one dynamic light beam, wherein each dynamic light beam has a beam divergence of less than 15 degrees and creates a moving light spot within the agricultural environment. Such an embodiment may advantageously increase the propensity of an animal (e.g. poultry) to move towards (e.g. to chase) the moving light spots created by the projected at least one dynamic light beam. The induced movement and/or exercise of the animal (e.g. poultry) may be further enhanced. The beam divergence may alternatively be phrased as beam divergence angle. The beam divergence (angle) may for example be less than 10 degrees, preferably less than 5 degrees, for example less than 1 degrees. The lower the beam divergence (angle), the more collimated light beam projected.

In a related embodiment, the controller may be configured to control the second lighting unit to project the at least one dynamic light beam according to a random movement pattern or a pseudorandom movement pattern. As partly mentioned before, environmental enrichment may render a (curious) response from an animal, particularly poultry, which gets the animal (e.g. poultry) moving. A random or pseudorandom movement pattern may thereby improve the effectiveness of inducing movement.

The at least one light beam may consist of any integer number of light beams, starting from a single beam to an integer number of N light beams. Preferably, N is between four and forty, so as to entertain the curiosity, and thereby induce movement and exercise, of multiple animals at the same time. Hence, in embodiments, the at least one light beam may comprise a plurality of light beams that create a respective plurality of light spots within the agricultural environment. In embodiments, the second lighting unit comprises a plurality of light emitting elements, each configured to emit one or more light beams of the at least one light beam.

The lighting system according to the present invention is arranged for illuminating the agricultural environment. Throughout the application, the agricultural environment may be phrased as an animal environment. The agricultural environment may be a livestock environment. The agricultural environment may be an indoor agricultural environment. For example, the agricultural environment may be at least part of an animal stable, an animal pen, a poultry coop, a farmhouse, an indoor animal enclosure, etc.

Moreover, the agricultural environment may comprise at least one animal. Therefore, the lighting system according to the present invention may be arranged for illuminating the agricultural environment and/or at least one animal within the agricultural environment. The at least one animal may preferably be poultry. The at least one animal may for example be a flock of birds, or a plurality of diurnal avians, or at least one chicken, or at least one broiler chicken. The concepts of the present invention are not limited to poultry, but may also be envisioned for other animals, such as for example pigs.

The lighting system according to the present invention comprises a first lighting unit configured to illuminate the agricultural environment with a first light having (or: comprising) a first light characteristic. Throughout the application, the phrase 'light characteristic' may alternatively be phrased as 'light property'.

The first light may be an ambient light. The first light of the first lighting unit may uniformly illuminate the agricultural environment. In embodiments, the first light may comprise a light recipe for rearing animals, preferably a light recipe for rearing poultry. The light recipe may alternatively be phrased as an animal light recipe, or an animal light scene. For example, said first light may comprise the trademarked Junglite Green light recipe of Signify-ONCE.

Hence, in aspects, the agricultural environment may comprise a surface area, wherein the first lighting unit (e.g. uniformly) illuminates the surface area of the agricultural environment with the first light having the first light characteristic, and the second lighting unit projects the at least one dynamic light beam on the same surface area.

Hence, in an embodiment, said first light may comprise a dominant peak (or: at least one local maximum) at a wavelength range between 450-480 nm and a dominant peak (or: at least one local maximum) at a wavelength range between 515-545 nm

Alternatively, the first light may be a functional light. The first light characteristic of the first light may (be chosen such to) facilitate a worker working in the agricultural environment.

In embodiments, the first lighting unit may be a luminaire or a lighting arrangement. In embodiments, the second lighting unit may comprise a laser, a LED spotlight, a projector, or a high-etendue spotlight. In embodiments, throughout the application, the at least one light beam may be at least one laser beam.

In an embodiment, the second lighting unit may comprise the controller. The second lighting unit may be a second luminaire comprising the controller (locally). Hence, the first lighting unit may be a first luminaire and the second lighting unit may be a second luminaire. In some examples, said first luminaire and said second luminaire may be separate (or: located separately in the agricultural environment). Hence, in aspects, the first lighting unit and the second unit may be separate (or: located separately in the agricultural environment).

In an embodiment, the lighting system comprises a luminaire comprising a luminaire housing; wherein the luminaire housing comprises the first lighting unit, the second lighting unit, and/or the controller. Hence, the same luminaire housing may comprise the second lighting unit and the controller, whereas the first lighting unit is separate. Hence, the same luminaire housing may comprise the first lighting unit, the second lighting unit and the controller, rendering all of said three apparatuses integrated in a single luminaire. Hence, the same luminaire housing may comprise the first lighting unit and the second lighting unit, whereas the controller may be separate and/or remote. All different configurations may have their respective constructional and operational benefits.

In other words, the lighting system may comprise a luminaire comprising a luminaire housing; wherein the luminaire housing comprises at least one of: the first lighting unit, the second lighting unit, the controller.

According to the invention, the controller is configured to determine a second light characteristic substantially different from the first light characteristic in response to the signal (indicative of the first light characteristic of the first light). Hence, the second light characteristic is different from the first light characteristic.

Altematively phrased, the second light characteristic may be (visually) contrasting with the first light characteristic. Alternatively phrased, the second light characteristic may be visually distinguishable for a diurnal avian (or poultry) from the first light characteristic.

The first light characteristic and the second light characteristic may represent the same light characteristic, but at a different value / condition thereof. For example, said light characteristic may comprise at least one of a light intensity, a light color, a light spectrum, a color temperature, a light polarization, a light illuminance. For example, according to the invention, the second light characteristic may be a second light color (second value) substantially different from the first light characteristic being a first light color (first value).

In an embodiment, the first light characteristic comprises a first light color, wherein the second light characteristic comprises a second light color substantially different from the first light color. Such an embodiment advantageously determines a different second light color based on the first light color of the first light, and controls the at least one light beam with said second light color so as to distinguish the at least one light beam (and resulting light spot) from the ambient first light. This improves visibility and consequently the environmental enrichment, while the first light may still be used for providing dynamic lighting, such as e.g. an animal light recipe.

In an embodiment, the first light is white light, wherein the first light color is white, wherein the second light color is one of: ultraviolet, violet, blue, green, red.

In an embodiment, the second light color and the first light color are complementary light colors. For example, the first light color may be green color light, whereas the second light color may be red color light. For example, the first light color may be blue color light, whereas the second light color may be orange color light. For example, the first color light may be ultraviolet or violet color light, whereas the second light color may be yellow color light.

In an embodiment, the first light characteristic comprises a first light color, wherein the second light characteristic comprises a second light color substantially different from the first light color for at least 80% of the time on a predefined time period. The predefined time period being at least ten minutes.

In an embodiment, the first light characteristic comprises a first light intensity, wherein the second light characteristic comprises a second light intensity, wherein the second light intensity is higher than the first light intensity. Such an embodiment advantageously determines a different second light intensity based on the first light intensity of the first light, and controls the at least one light beam with said second light intensity so as to distinguish the at least one light beam (and resulting light spot) from the ambient first light. This improves visibility and consequently the environmental enrichment, while the first light may still be used for providing dynamic lighting, such as e.g. an animal light recipe.

In related embodiments, the first light characteristic comprises a first light intensity, wherein the second light characteristic comprises a second light intensity, wherein the second light intensity is at least a factor 1.2 higher than the first light intensity, preferably a factor 1.5 higher.

In an embodiment, the first light characteristic comprises a first light intensity, wherein the second light characteristic comprises a second light intensity, wherein the second light intensity is higher than the first light intensity for at least 80% of the time on a predefined time period. The predefined time period being at least ten minutes.

In an embodiment, the first light characteristic comprises a first light spectrum; wherein the second light characteristic comprises a second light spectrum, wherein a wavelength of at least one a dominant peak of the second light spectrum is at least 30 nm different from a wavelength of at least one dominant peak of the first light spectrum.

In an embodiment, the first light characteristic comprises a first color temperature; wherein the second light characteristic comprises a second color temperature; wherein the second color temperature differs at least 200 Kelvin from the first color temperature.

In an embodiment, the first light characteristic comprises a first light polarization, wherein the second light characteristic comprises a second light polarization substantially different from the first light polarization. Thereby, the second lighting unit may be a laser lighting unit.

In an embodiment, the first light characteristic comprises a first illuminance; wherein the second light characteristic comprises a second illuminance; wherein the second illuminance is higher than the first illuminance, or wherein the first illuminance is higher than the second illuminance. Such a difference in illuminance may render sufficient contrast to visualize the created light spot(s) relative to the first light. The second illuminance may for example be at least 10 lux higher than the first illuminance, or vice versa.

In embodiments, the controller is configured to wirelessly receive the signal indicative of the first light characteristic of the first light, and to obtain the first lighting characteristic from said signal. Said signal may for example be a radiofrequency signal.

In embodiments, the first lighting unit is configured to illuminate the agricultural environment with a first light having a first light characteristic during a first time period, wherein the controller is configured to obtain the first light characteristic during the first time period, and control the second light characteristic of each dynamic light beam in response to the obtained first light characteristic during the first time period.

The controller may be configured to automatically control the second lighting characteristic of each dynamic light beam in response to the obtained first lighting characteristic. This may render a real-time adaptive control of the second light characteristic of the at least one beam projected by the second lighting unit.

In embodiments, the controller is configured to repeatedly, continuously, or continually: (i) obtain a signal indicative of the first light characteristic of the first light, (ii) determine a second light characteristic substantially different from the first light characteristic in response to the signal; (iii) control the second lighting unit to project the at least one beam with said second light characteristic.

In embodiments, each light beam of the at least one light beam comprises an initial light characteristic, wherein the controller according to the invention is configured to (i) obtain the signal indicative of the first light characteristic of the first light, (ii) determine a second light characteristic substantially different from the first light characteristic in response to the signal; (iii) control the second lighting unit to project the at least one light beam with said second light characteristic by adapting the initial light characteristic to the second light characteristic. Hence, the controller may be configured to adapt the initial light characteristic of each light beam to the second light characteristic in response to the obtained signal.

In an embodiment, the first lighting unit may be configured to determine and convey the signal indicative of the first light characteristic of the first light to the controller.

In an embodiment, the lighting system may comprise a sensor device configure to determine (or: sense, or: measure) the first lighting characteristic of the first light, wherein the sensor device is configured to convey the signal indicative of the first light characteristic of the first light to the controller.

In an embodiment, the lighting system may comprise a sensor device configure to determine (or: sense, or: measure) a reflected first light characteristic caused by the first light reflecting from a surface within the agricultural environment, wherein the sensor device is configured to convey the signal indicative of the reflected first light characteristic to the controller; wherein the controller is configured to (i') obtaining a further signal indicative of the reflected first light characteristic, (ii) determining a second light characteristic substantially different from the first light characteristic and the reflected first light characteristic in response to the signal, (iii) controlling the second lighting unit to project the at least one beam with said second light characteristic. Hence, the lighting system according to the invention may take into account the reflection of the first light (illuminating the agricultural environment) from a surface (such as e.g. a bedding or flooring) within the agricultural environment. Thereby, each light beam may create a light spot on said surface within the agricultural environment.

In an embodiment, the lighting system may comprise a sensor device configured to obtain a surface property of a surface of the agricultural environment, or comprise a user input device configured to obtain a surface property of a surface of the agricultural environment; wherein the controller is configured to: obtain a input signal indicative of said surface property from the sensor device or the user input device, and determine the second light characteristic substantially different from the first light characteristic in response to the signal and in response to the input signal indicative of said surface property.

In an embodiment, the lighting system comprises a luminaire comprising a luminaire housing; wherein the luminaire housing comprises at least one of: the first lighting unit, the second lighting unit, the sensor device, and/or the controller.

Opposite to the embodiment of projecting the at least one dynamic light beam according to a pseudorandom or random movement pattern, in alternative aspects, the controller may be configured to control the second lighting unit to project the at least one dynamic light beam according to a predefined and/or specific movement pattern. Said predefined movement pattern may for example be a pathway from a first region of the agricultural environment to a second region of the agricultural environment. For example, a pathway in a direction away from a center of the agricultural environment and/or a pathway in a direction to an outskirt of the agricultural environment. For example, the first region may be crowded, whereas the second region may be open. For example, the first region may comprise a flock of fighting animals, whereas the second region may comprise a flock of quiet animals. For example, the second region may comprise a feeding point or watering point for at least one animal within the agricultural environment. Hence, said movement patterns may be specific, and may comprise a predefine trajectory.

It is further an object of the invention to provide an improved method which at least alleviates the problems and disadvantages mentioned above. Thereto, the invention provides a method according to claim 13 of illuminating an agricultural environment, wherein the method comprises: a first lighting unit illuminating the agricultural environment with a first light having a first light characteristic; a second lighting unit projecting at least one dynamic light beam, wherein each dynamic light beam has a beam divergence of less than 15 degrees and creates a moving light spot within the agricultural environment; a controller (i) obtaining a signal indicative of the first light characteristic of the first light, (ii) determining a second light characteristic substantially different from the first light characteristic in response to the signal, (iii) controlling the second lighting unit to project the at least one dynamic beam with said second light characteristic. The first light characteristic comprises a first light spectrum; wherein the second light characteristic comprises a second light spectrum; wherein a wavelength of at least one a dominant peak of the second light spectrum is at least 30 nm different from a wavelength of at least one dominant peak of the first light spectrum. Thereby, advantages and/or embodiments applying to the lighting system according to the invention may mutatis mutandis apply to said method according to the invention.

It is further an object of the invention to provide an improved poultry coop which at least alleviates the problems and disadvantages mentioned above. Thereto, the invention provides a poultry coop according to claim 14 comprising: the lighting system according to the invention; and a poultry enclosure configured to enclose poultry, wherein the at least one dynamic light beam projected by the second lighting unit of the lighting system creates at least one respective light spot within the poultry enclosure. Thereby, advantages and/or embodiments applying to the lighting system according to the invention may mutatis mutandis apply to said poultry coop according to the invention.

It is further an object of the invention to provide an improved luminaire which at least alleviates the problems and disadvantages mentioned above. Thereto, the invention provides a luminaire according to claim 15 for projecting at least one light beam within an agricultural environment that is being illuminated with a first light having a first light characteristic; wherein the luminaire comprises a luminaire housing, a lighting unit, and a controller; wherein the luminaire housing comprises the lighting unit and the controller; wherein the lighting unit is configured to project at least one dynamic light beam, wherein each dynamic light beam has a beam divergence of less than 15 degrees and creates a moving light spot within the agricultural environment; wherein the controller is configured to: (i) obtain a signal indicative of the first light characteristic of the first light, (ii) determine a second light characteristic substantially different from the first light characteristic in response to the signal; (iii) control the lighting unit to project the at least one dynamic light beam with said second light characteristic. The first light characteristic comprises a first light spectrum; wherein the second light characteristic comprises a second light spectrum; wherein a wavelength of at least one a dominant peak of the second light spectrum is at least 30 nm different from a wavelength of at least one dominant peak of the first light spectrum. Said at least one light beam may be a dynamic light beam. The second lighting unit may for example be a laser.

Thereby, advantages and/or embodiments applying to the lighting system according to the invention may mutatis mutandis apply to said luminaire according to the invention.

In aspects, that at least alleviates the problems and disadvantages mentioned above, there is also disclosed, however not claimed, a lighting system for illuminating an agricultural environment, wherein the lighting system comprises: a first sensor unit configured to determine a first property of a surface within the agricultural environment; a lighting unit configured to project at least one light beam, wherein each light beam has a beam divergence of less than 15 degrees and creates a light spot on the surface within the agricultural environment; a controller for controlling the lighting unit, wherein the controller is configured to: (i) obtain a signal indicative of the first property of the surface of the agricultural environment, (ii) determine a light characteristic contrasting with the first property of the surface of the agricultural environment in response to the signal; (iii) control the lighting unit to project the at least one light beam with said light characteristic.

Said first property may for example be color. Hence, the first sensor unit is configured to determine a color of the surface within the agricultural environment. The sensor unit may be for example a camera. The first sensor unit may convey the signal indicative of the first property of the surface of the agricultural environment to the controller. Said color of the surface within the agricultural environment may for example be yellow. The light characteristic may for example be violet, because violet is contrasting with yellow. Hence, in aspects, the property comprises a color of the surface, wherein the light characteristic comprises a light color substantially different from said color of the surface.

It is an object of the disclosure to further provide an improved lighting system, which at least alleviates the problems and disadvantages mentioned above. Herein is also disclosed, however not claimed, a lighting system for illuminating an agricultural environment, wherein the lighting system comprises: a first lighting unit configured to illuminate the agricultural environment with a first light having a first light characteristic; a second lighting unit configured to project at least one dynamic light beam, wherein each dynamic light beam has a beam divergence of less than 15 degrees and creates a moving light spot within the agricultural environment; a controller for controlling the second lighting unit, wherein the controller is configured to: (i) obtain a signal indicative of the first light characteristic of the first light, (ii) determine a second light characteristic substantially different from the first light characteristic in response to the signal; (iii) control the second lighting unit to project the at least one dynamic light beam with said second light characteristic. Thereby, advantages and/or embodiments applying to the lighting system according to the invention may mutatis mutandis apply to said further lighting system.

### BRIEF DESCRIPTION OF THE DRAWINGS

The invention will now be further elucidated by means of the schematic non-limiting drawings:
Fig. 1 depicts schematically an embodiment of a lighting system according to the invention;
Fig. 2 depicts schematically an embodiment of a luminaire according to the invention;
Fig. 3 depicts schematically an embodiment of a method according to the invention.
Fig. 4 depicts schematically an embodiment of a lighting system to the invention.

### DETAILED DESCRIPTION OF THE EMBODIMENTS

As partly mentioned: Animal health and wellbeing has become a relevant topic in animal farming. Animal health and wellbeing may be improved by getting animals to move around and exercise in a controlled manner, which is of particular relevance for poultry such as broiler chicken. Environmental enrichment may encourage such animals to move and exercise. Environmental enrichment is typically characterized by laser spots projected on a poultry coop bedding, either stationary or moving, so as to render a (curious) response from the broiler chicken, that gets the broiler chicken moving. However, the effectiveness of the projected laser spots of the environmental enrichment may be negatively affected, if the environment is already being illuminated by another dynamic lighting system interfering with the visibility of the laser spots. Hence, there is clear desire to maximize the individual effects of different lighting systems for improving the health and wellbeing of poultry. The present invention provides solutions thereto.

The invention will be described with reference to the Figures.

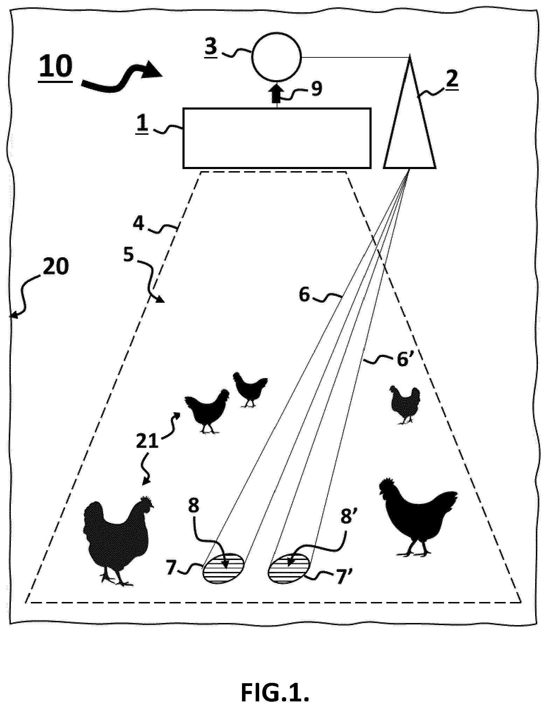

Figure 1 depicts schematically, by non-limiting example, an embodiment of a lighting system 10 according to the invention. The lighting system 10 is arranged for illuminating an agricultural environment 20. The agricultural environment 20 is at least part of a poultry coop and comprises poultry 21. Hence, the lighting system 10 also illuminates the poultry 21 within the agricultural environment 20. Moreover, the lighting system 10 may be comprised by a poultry coop having the agricultural environment. The agricultural environment may for example be at least part of a poultry enclosure.

The lighting system 10 comprises a first lighting unit 1, a second lighting unit 2, and a controller 3. Here, the first lighting unit 1, the second lighting unit 2, and the controller 3 are embodied separate from each other.

Alternatively, the first lighting unit, the second lighting unit and/or the controller may be housed within a same luminaire housing of a luminaire. For example, the first lighting unit and the second lighting unit may be housed within a same luminaire, while the controller may be separate and remote. For example, the first lighting unit may be separate from the second lighting unit, but wherein the second lighting unit is a luminaire comprising the controller. In some examples, the controller may be a portable device, such as for example a smartphone or tablet.

Referring to figure 1, the first lighting unit 1 illuminates the agricultural environment 20 (and the poultry 21) with a first light 4. The first light 4 has, or comprises, a first light characteristic 5. More specifically, the first light is an ambient light, and provides an animal light recipe. Hence, the first light characteristic 5 of the first light 4 is thereby a first light color. Here, the first light color is green light. Said green light mimics for example the jungle habitat the chicken are naturally accustomed to from evolutionary perspective. Such green light may for example be the Signify-ONCE Junglite Green animal light recipe. Hence, the first light characteristic 5 of the first light 4 improves the perceived comfort of the poultry 21, thereby the health and wellbeing of the poultry 21 in the agricultural environment 20.

Alternatively, the first light may be a functional light. The first light characteristic of the first light may (be chosen such to) facilitate a worker working in the agricultural environment. Yet alternatively, the first light may in aspects be uniformly distributed.

As partly mentioned, another concept to improve animal health and wellbeing, particularly for poultry (e.g. broiler chicken), is environmental enrichment. Therefore, the lighting system 10 according to the invention comprises the second lighting unit 2. The second lighting unit 2 is configured to project at least one light beam 6, 6' in the agricultural environment 20. The controller 3 is configured to control the second lighting unit 2, and optionally the first lighting unit 1 as well.

Figure 1 depicts two light beams, a first light beam 6, and second light beam 6'. However, alternatively, the at least one light beam may consist of any integer number of light beams, starting from a single beam to an integer number of N light beams. Preferably, N is between four and forty, so as to entertain the curiosity, and thereby induce movement and exercise, of multiple animals at the same time.

Still referring to figure 1, each light beam 6, 6' has a beam divergence of less than 15 degrees (i.e. fifteen degrees) and creates a respective light spot 7, 7' within the agricultural environment 20. The poultry 21 may have a propensity to move towards (or away from) said light spots 7, 7' and thereby be encouraged to move and/or exercise.

Here, the second lighting unit may comprise a laser, a LED spotlight, a projector, or a high-etendue spotlight, for projecting said at least one light beam 6, 6'. The at least one light beam 6, 6'may for example be a laser (light) beam or a high-etendue LED light beam.

Approaches for generating a directed or collimated light beam will be apparent to the skilled person (e.g., using appropriate lenses and/or light shielding/mirroring arrangements). The beam divergence (angle) may alternatively be less than 5 degrees, e.g. less than 1 degrees, so as to render a more collimated beam. This beam divergence may be achieved using one or more lasers to produce each light beam. Alternatively, this beam divergence can be achieved using a light source (e.g., an LED) and a collimator for collimating light emitted by the light source. The second lighting unit may for example be a pixilated LED spot, or a pixelated LED array, that can generate the at least one light beam, and control the location of the respective light spots that are created. Alternatively, the second lighting unit may comprise a swiveling mirror to project the at least one light beam and create dynamic light spots within the agricultural environment.

Here, the second lighting unit projects the at least one light beam dynamically, hence the at least one light beam being at least one dynamic light beam 6, 6', wherein each light beam thereof creates a moving light spot 7, 7' within agricultural environment 20. Here, albeit optionally, the controller 3 controls the second lighting unit 2 to project the at least one dynamic light beam 6, 6' according to a random movement. Said random movement may alternatively be a pseudorandom movement. The at least one light beam may yet alternatively be a static light beam.

The lighting system 10 further comprises the controller 3. The controller 3 controls the second lighting unit 2 to project the at least one light beam 6, 6'.

The lighting properties of the at least one light beam 6, 6', more specifically the visibility of the at least one light beam 6, 6' (and the resulting light spot 7, 7' in the agricultural environment 20) may determine the effectiveness of the environmental enrichment caused, and the propensity of the poultry 21 to move towards (and/or away from) said light spots 7, 7' created by the projected at least one light beam 6, 6'. Such visibility improves when sufficient difference (or: contrast) exists between the at least one light beam 6, 6' (and the resulting light spot 7, 7' in the agricultural environment 20) and the illumination (conditions) in the agricultural environment 20. Namely, the first light 4 has the first light characteristic 5 of a green light color, as mentioned. However, for example, if a similarly colored green light spot would be projected, said green light spot would not have sufficient contrast relative to the ambient green light color of the first light, and thereby the light spot itself and/or its dynamics would barely be noticeable by the poultry, and therefore diminish the effects of enrichment.

Hence, according to the invention, the lighting system comprises a controller 3 that is explicitly configured to obtain a signal 9 indicative of the first light characteristic 5 of the first light 4. Said signal may either be a wired signal, or a wireless signal. Here, the controller 3 is wiredly connected to the first lighting unit 1 and the second lighting unit 2. Alternatively, the controller may be wirelessly connected to the first lighting unit and/or the second lighting unit. The controller 3 is configured to receive the signal 9 from the first lighting unit 1, wherein the first lighting unit 1 conveys the signal 9 to the controller 3. Alternatively, the controller may be configured to receive or retrieve the signal from the first lighting unit, or retrieve or receive said conveyed signal via a control device or a bridge device associated with the first lighting unit.

Hence, the controller 3 is configured to obtain a signal 9 indicative of the first light characteristic 5 of the first light 4. The controller 3 is also configured to determine a second light characteristic 8 substantially different from the first light characteristic 5 in response to the signal 9. The second light characteristic 8 may be visually distinguishable from the first light characteristic 5.

As mentioned, the first light characteristic 5 is a first light color, and the first light color is green light. Consequently, the controller 3 determines a second light characteristic 8 to be a second light color that is substantially different from the first light color 5 of the first light, i.e. green light.

Still referring to the embodiment depicted in figure 1, here, the second light color 8, 8' and the first light color 5 are complementary light colors. Hence, the controller 3 may for example comprise a database storing (the settings for generating) complementary colors, or be configured to access a database storing complementary colors; and based on the first light characteristic being a first light color (i.e. green) retrieve the corresponding complementary second light color, and determine this to be the complementary second light color. Here, the second light characteristic is the light color red, because red is the complementary color for green.

Still referring to Figure 1, the controller 3 is configured to control the second lighting unit 2 to project the at least one light beam 6, 6' with said second light characteristic, i.e. the red color light.

As a result, the controller 3 determines a second light characteristic 8, 8', such that the projected at least one light beam 6, 6' comprising said second light characteristic 8, 8' (i.e. red color light) will be substantially different from (or: contrasting with, or: distinguishable from) the first light characteristic 5 of the first light 4, thereby improving the visibility of the projected at least one light beam 6, 6' within the agricultural environment 20 relative to the first light 4 illuminating the agricultural environment 21 with the first light characteristic 5 (i.e. green color light).

Alternatively, the first light color may be blue color light, whereas the second light color may be orange color light; or the first light color may be ultraviolet or violet color light, whereas the second light color may be yellow color light. Other examples may be similarly envisioned.

Alternatively, and/or additionally, the first light characteristic may comprise a first light polarization, wherein the second light characteristic comprises a second light polarization substantially different from the first light polarization.

In further alternative embodiments, the second light color is substantially different from the first light color, but the second light color and the first light color are not necessarily complementary colors. For example, the first light may have the first light characteristic of blue light, whereas the second light characteristic may be red light. Poultry may benefit from the blue color ambient light (e.g. to calm the poultry or to serve as an anti-picking animal light scene), whereas the red colored light spots of the light beams may advantageously attract the chicken while also contrasting against the blue color ambient light to improve visibility. This combination may therefore be beneficial for the poultry health and wellbeing. Other examples may be similarly envisioned.

All in all, the present invention provides for the properties 8, 8' of the at least one light beam 6, 6' of the second lighting unit 2 to be controlled based on, or in dependence of, the properties 5 of the first light 4 of the first lighting unit 1.

Hence, the lighting system 10 according to the invention improves the enrichment caused by the second lighting unit 2 projecting at least one light beam 6, 6' within the agricultural environment 20, thereby promoting the advantages of enrichment, while the first light 4 illuminating the environmental environment 20 with the green color light remains effective for animal health and wellbeing as well (i.e. mimicking the jungle habitat). The present invention maximizes the individual effects of both lighting units.

Additionally, or alternatively, the first light characteristic may comprise a first light intensity, wherein the second light characteristic may comprise a second light intensity, wherein the second light intensity is higher than the first light intensity. The second light intensity may for example be at least a factor 1.2 higher than the first light intensity, preferably a factor 1.5 higher.

Additionally, or alternatively, the first light characteristic may comprise a first color temperature; wherein the second light characteristic may comprise a second color temperature; wherein the second color temperature differs at least 200 Kelvin from the first color temperature.

Additionally, or alternatively, the first light characteristic may comprise a first illuminance; wherein the second light characteristic may comprise a second illuminance; wherein the second illuminance is higher than the first illuminance.

In an alternative embodiment, that is not depicted, a lighting device according to the embodiment depicted in Figure 1 is provided, but the first light characteristic and the second light characteristic are selected differently. The first light characteristic is still a first light color, and the second light is still a second light color. The first light color and the second light color are still complementary light colors. However, according to this alternative embodiment, the first light characteristic is violet color light (or: ultraviolet color light). The first light is therefore an anti-pathogen light, e.g. an antibacterial light. This may benefit the health and wellbeing of the poultry. Furthermore, according to this alternative embodiment, the second light characteristic is yellow color light. Yellow and violet are complementary colors. Hence, the second lighting unit will project the at least one light beam with a yellow color light, highly contrasting, maximally distinguishing, with the violet color light of the first light, thereby enabling the poultry to see the light spots, chase the light spots, and consequently move around and exercise. This maximizes the enrichment caused by the projected at least one light beam, while at the same time the violet (or: ultraviolet color light) is maximally utilized for the benefit of the poultry.

In an alternative embodiment, that is not depicted, a lighting device according to the embodiment depicted in Figure 1 is provided, but the controller obtains a signal, the signal being indicative of the first light characteristic of the first light illuminating the agricultural environment during a first time period. Hence, the controller may either beforehand learn, or in real-time learn, that the agricultural environment is planned to be, or is currently being, illuminated with the first light having the first light characteristic. The controller can therefore anticipate or adapt the second light characteristic based thereon, such that the controller can control the second lighting unit to project the at least one light beam with the second light characteristic during at least part of said first time period.

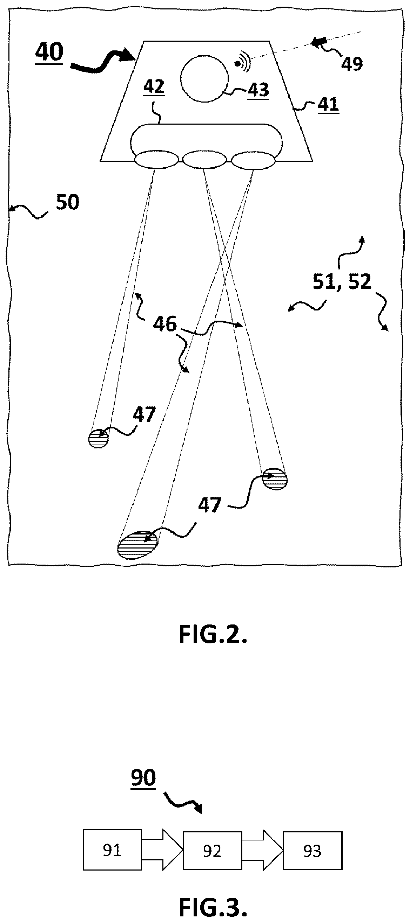

Figure 2 depicts schematically, by non-limiting example, an embodiment of a luminaire 40 according to the invention. The luminaire 40 is arranged for projecting at least one light beam 46 within an agricultural environment 50 that is being illuminated with a first light 51 having a first light characteristic 52.

Here, the agricultural environment 50 is at least part of an animal enclosure, for example a poultry coop. The poultry coop may comprise poultry. The first light 51 is ambient light illuminating the agricultural environment 50. The first light 51 may illuminate the agricultural environment uniformly. The first light is beneficial for animals within the agricultural environment 50.

Moreover, the first light 51 according to the present embodiment comprises an animal light scene. The first light 51 (i.e. the animal light scene) is characterized by a first light intensity and a first light spectrum.

Still referring to Figure 2, the luminaire 40 comprises a luminaire housing 41, a lighting unit 42 and a controller 43. The luminaire housing 41 thereby comprises (or: houses) the lighting unit 42 and the controller 43.

The lighting unit 42 is configured to project at least one light beam 46. Here, the lighting unit 42 is configured to project a plurality of light beams, depicted in Figure 2 as three light beams. In some examples, the lighting unit may project only one light beam. Each light beam of the at least one light beam 46 has a beam divergence of less than 15 degrees, and creates a respective light spot 47 within the agricultural environment. Here, said beam divergence may for example be less than 5 degrees, rendering a more collimated light beam.

More specifically, referring to Figure 2, the at least one light beam 46 is at least one dynamic laser light beam 46. The lighting unit 42 comprises a laser configured to project this at least one dynamic laser light beam 46. As a result, the lighting unit 42 and the projected at least one dynamic laser light beam 46 enable environmental enrichment in the agricultural environment, for example a plurality of dynamic (laser) light spots that animals (such as for example the mentioned poultry) can chase and consequently move and exercise.

However, the first light 51 illuminating the agricultural environment 50 with the first light characteristic 52 (characterized by the first light intensity and the first light spectrum) may interfere and/or conflict with the environmental enrichment enabled by the lighting unit 42. Namely, the visibility of the at least one dynamic (laser) light beam and corresponding (laser) light spots may be affected by the first light 51, thereby reducing the effectiveness of the environmental enrichment with said at least one dynamic (laser) light beam 46.

The controller 43 may optionally be configured to control the second lighting unit to project the at least one dynamic light beam according to a random movement pattern or a pseudorandom movement pattern.

Hence, still referring to the embodiment depicted in Figure 2, the controller 43 of the luminaire 40 is configured to obtain a signal 49 wirelessly. The controller 43 may therefore comprise a wireless receiver, or wireless transceiver, for said purpose. The signal 49 is indicative of the first light characteristic 52 of the first light. Namely, the signal 49 is indicative of the first light intensity and the first light spectrum. In an alternative embodiment, the controller is configured to repeatedly, continuously, or continually, obtain said signal indicative of the first light characteristic of the first light.

The signal may for example be wirelessly conveyed by a lighting controller or a bridge device controlling a first lighting unit illuminating the agricultural environment with the first light. The signal may also for example be wirelessly conveyed by a luminaire illuminating the agricultural environment 50 with the first light 51. The signal may also for example be wirelessly conveyed by a sensor device measuring the first light characteristic of the first light. The signal may also for example be wirelessly conveyed by a management device registering the lighting conditions within the agricultural environment.

Here, still referring to Figure 2, the signal is obtained from a lighting controller (not depicted) controlling a first lighting unit illuminating the agricultural environment with the first light.

The controller 43 is further configured to determine a second light characteristic substantially different from the first light characteristic 52 in response to the signal. More specifically, as the first light characteristic is characterized by the first light intensity and the first light spectrum, the controller 43 is configured to determine a second light characteristic comprising a second light intensity that is different from the first light intensity and a second light spectrum that is different from the second light spectrum. Thereby, the second light intensity is higher than the first light intensity, preferably at least a factor 1.2 higher than the first light intensity, most preferably at least a factor 1.5 higher than the first light intensity. Thereby, the second light spectrum comprises at least one dominant peak, and the first light spectrum comprises at least one dominant peak, wherein a wavelength of the at least one a dominant peak of the second light spectrum is at least 30 nm (for example 60 nm) different from a wavelength of at least one dominant peak of the first light spectrum.

Hence, referring to Figure 2, the controller determines the second light intensity to be at least a factor 2 higher than the first light intensity, and the controller determines a wavelength of a dominant peak of the second light spectrum to be at least 60 nm different from a wavelength of at least one dominant peak of the first light spectrum.

For example, the first light characteristic may comprise a first light intensity of 3 lumen, whereas the second light intensity may be at least 6 lumen. For example, the first light characteristic may comprise a first light spectrum with a dominant peak at a wavelength of 510 nm, whereas the second light spectrum is determined by the controller to comprise a dominant peak at a wavelength of at least 60 nm different from 510 nm, such as 610 nm.

Still referring to Figure 2, the controller 43 is configured to control the lighting unit 42 to project the at least one dynamic (laser) light beam 46 with said second light characteristic. The at least one dynamic (laser) light beam 46 will therefore contrast with the ambient first light 51. This improves the visibility of the at least one dynamic (laser) light beam 46 and consequently the environmental enrichment, while the first light 51 may still be advantageously illuminating the agricultural environment 50 with the animal light recipe with the first light characteristic 52.

Additionally, or alternatively, the first light characteristic may comprise a first light color, wherein the second light characteristic may comprise a second light color, wherein the second light color is substantially different from the first light color. For example, first light color and the second light color may be complementary colors.

Additionally, or alternatively, the first light characteristic may comprise a first color temperature; wherein the second light characteristic may comprise a second color temperature; wherein the second color temperature differs at least 200 Kelvin from the first color temperature. Additionally, or alternatively, the first light characteristic may comprise a first illuminance; wherein the second light characteristic may comprise a second illuminance; wherein the second illuminance is higher than the first illuminance.

In an alternative embodiment, that is not depicted, a luminaire according to the embodiment depicted in Figure 2 is provided, or a lighting system according to the embodiment depicted in Figure 1 is provided, but wherein each light beam of the at least one light beam comprises an initial light characteristic. The controller is thereby configured, as mentioned, to obtain the signal indicative of the first light characteristic of the first light, and determine a second light characteristic substantially different from the first light characteristic in response to the signal. However, the controller is in the present alternative embodiment configured to control the lighting unit to project the at least one light beam with said second light characteristic by adapting the initial light characteristic (of the at least one light beam) to the second light characteristic. Hence, the controller may be configured to adapt the initial light characteristic of each light beam to the second light characteristic in response to the obtained signal.

Figure 3 depicts schematically, by non-limiting example, an embodiment of a method 90 of illuminating an agricultural environment according to the invention. The method may be performed by the lighting system and/or luminaire according to the invention. The method 90 comprises a step 91 of a first lighting unit illuminating the agricultural environment with a first light having a first light characteristic. The method 90 comprises a step 92 of a second lighting unit projecting at least one light beam, wherein each light beam has a beam divergence of less than 15 degrees and creates a light spot within the agricultural environment. The method 90 comprises a step 93 of a controller (i) obtaining a signal indicative of the first light characteristic of the first light, (ii) determining a second light characteristic substantially different from the first light characteristic in response to the signal, (iii) controlling the second lighting unit to project the at least one beam with said second light characteristic.

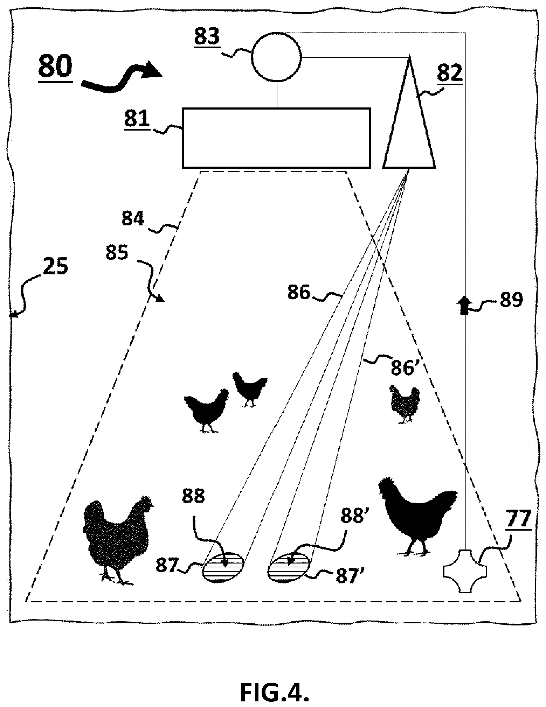

Figure 4 depicts schematically, by non-limiting example, an embodiment of a lighting system 80 according to the invention. The lighting system 80 illuminates an agricultural environment 25, such as a poultry stable. The lighting system 80 comprises a first lighting unit 81, a second lighting unit 82, a controller 83, and a sensor device 77.

Here, the first lighting unit 81, the second lighting unit 82, the controller 83, and the sensor device 77 are all separate, but in wired or wireless communication with each other. Alternatively, the lighting device may comprise a housing, wherein the housing comprises at least one of: the first lighting unit 81, the second lighting unit 82, the controller 83, and the sensor device 77.

Still referring to Figure 4, the first lighting unit 81 illuminates the agricultural environment 25 with a first light 84 having a first light characteristic 85. The first lighting unit 81 may for example be a (LED) luminaire. The first light 84 may for example be an ambient light, such as an animal light. Here, the first light characteristic 85 comprises a light color, but may additionally or alternatively comprise e.g. a light intensity and/or light polarization.

The second lighting unit 82 projects at least one light beam 86, 86'. The at least one light beam may be at least one dynamic light beam. The at least one light beam may be a plurality of (dynamic) light beams. Each light beam of the at least one (dynamic) light beam has a beam divergence of less than 15 degrees and creates a (respective) light spot 87, 87' within the agricultural environment 25. The second lighting unit 82 may for example be a pixilated LED luminaire or laser lighting unit. Hence, the at least one light beam may for example be a laser light beam.

The sensor device 77 is configured to determine (or: measure, or: sense, or: determine) the first lighting characteristic 85 of the first light 84. Namely, the sensor device 77 is configured to determine the light color 85 of the first light 84, and may additionally or alternatively determine e.g. said light intensity and/or said light polarization of the first light. The sensor device 77 is configured to convey a signal 89 indicative of the first light characteristic 85 of the first light 84 to the controller 83. The sensor device 77 may for example be a light sensor. The sensor device 77 may alternatively be a camera.

The controller 83 is configured to control the second lighting unit 82, and/or optionally the first lighting unit. The controller 83 is configured to obtain the signal 89 indicative of the first light characteristic 85 of the first light 84. Namely, the controller is configured to receive or retrieve said first light characteristic 85, i.e. the light color, from the signal 89 conveyed by the sensor device 77. The controller 83 is further configured to determine a second light characteristic 88, 88' substantially different from the first light characteristic 85 in response to the signal 89; (iii) control the second lighting unit 82 to project the at least one light beam 86, 86' with said second light characteristic 88, 88'.

Hence, the present invention provides for the properties 88, 88' of the at least one light beam 86, 86' of the second lighting unit 82 to be automatically controlled based on, or in dependence of, the properties 85 of the first light 84 of the first lighting unit 81, which are detected by the sensor device 77.

Hence, the lighting system 80 according to the invention improves the enrichment caused by the second lighting unit 82 projecting at least one light beam 86, 86' within the agricultural environment 25, thereby promoting the advantages of enrichment, while maintaining the first light 84 illuminating the environmental environment 25 as is.

In examples, the sensor device 77 may be part of the second lighting unit 82.

## Claims

1. A lighting system (10) for illuminating an agricultural environment (20), wherein the lighting system comprises:
- a first lighting unit (1) configured to illuminate the agricultural environment with a first light (4) having a first light characteristic (5);
- a second lighting unit (2) configured to project at least one dynamic light beam (6, 6'), wherein each dynamic light beam (6, 6') has a beam divergence of less than 15 degrees and creates a moving light spot (7, 7') within the agricultural environment;
- a controller (3) for controlling the second lighting unit (2), wherein the controller is configured to: (i) obtain a signal (9) indicative of the first light characteristic (5) of the first light (4), (ii) determine a second light characteristic (8) substantially different from the first light characteristic (5) in response to the signal (9); (iii) control the second lighting unit (2) to project the at least one dynamic light beam (6, 6') with said second light characteristic (8);
wherein the first light characteristic (5) comprises a first light spectrum;
wherein the second light characteristic (8) comprises a second light spectrum;
wherein a wavelength of at least one a dominant peak of the second light spectrum is at least 30 nm different from a wavelength of at least one dominant peak of the first light spectrum

2. The lighting system according to claim 1,wherein the controller is configured to control the second lighting unit to project the at least one dynamic light beam according to a predefined and/or specific movement pattern;
wherein said predefined movement pattern is a pathway from a first region of the agricultural environment to a second region of the agricultural environment.

3. The lighting system according to claim 1, wherein the controller is configured to control the second lighting unit to project the at least one dynamic light beam according to a random movement pattern or a pseudorandom movement pattern.

4. The lighting system according to any one of the preceding claims, wherein the first light characteristic comprises a first light color, wherein the second light characteristic comprises a second light color substantially different from the first light color.

5. The lighting system according to any one of the preceding claims, wherein the controller is configured to wirelessly receive the signal indicative of the first light characteristic of the first light, and to obtain the first lighting characteristic from said signal .

6. The lighting system according to claim 4, wherein the second light color and the first light color are complementary light colors.

7. The lighting system according to any one of the preceding claims, wherein the first light characteristic comprises a first light intensity, wherein the second light characteristic comprises a second light intensity, wherein the second light intensity is higher than the first light intensity.

8. The lighting system according to any one of the preceding claims, wherein the first lighting unit is configured to determine the first light characteristic and convey the signal indicative of the first light characteristic of the first light to the controller.

9. The lighting system according to any one of the preceding claims, wherein the first light is a light recipe for rearing animals, preferably for rearing poultry.

10. The lighting system according to any one of the preceding claims, wherein the second lighting unit comprises a laser, LED spotlight, or a high-etendue spotlight.

11. The lighting system according to any one of the preceding claims, wherein the second lighting unit comprises the controller.

12. The lighting system according to any one of the preceding claims, wherein the first light characteristic comprises a first light polarization, wherein the second light characteristic comprises a second light polarization substantially different from the first light polarization.

13. A method of illuminating an agricultural environment, wherein the method comprises:
- a first lighting unit illuminating the agricultural environment with a first light having a first light characteristic;
- a second lighting unit projecting at least one dynamic light beam, wherein each dynamic light beam has a beam divergence of less than 15 degrees and creates a moving light spot within the agricultural environment;
- a controller (i) obtaining a signal indicative of the first light characteristic of the first light, (ii) determining a second light characteristic substantially different from the first light characteristic in response to the signal, (iii) controlling the second lighting unit to project the at least one dynamic beam with said second light characteristic;
wherein the first light characteristic comprises a first light spectrum;
wherein the second light characteristic comprises a second light spectrum;
wherein a wavelength of at least one a dominant peak of the second light spectrum is at least 30 nm different from a wavelength of at least one dominant peak of the first light spectrum.

14. A poultry coop comprising:
the lighting system according to any one of the preceding claims 1 to 12; and
a poultry enclosure configured to enclose poultry, wherein the at least one dynamic light beam projected by the second lighting unit of the lighting system creates at least one respective light spot within the poultry enclosure.

15. A luminaire for projecting at least one light beam within an agricultural environment that is being illuminated with a first light having a first light characteristic;
wherein the luminaire comprises a luminaire housing, a lighting unit, and a controller;
wherein the luminaire housing comprises the lighting unit and the controller;
wherein the lighting unit is configured to project at least one dynamic light beam, wherein each dynamic light beam has a beam divergence of less than 15 degrees and creates a moving light spot within the agricultural environment;
wherein the controller is configured to: (i) obtain a signal indicative of the first light characteristic of the first light, (ii) determine a second light characteristic substantially different from the first light characteristic in response to the signal; (iii) control the lighting unit to project the at least one dynamic light beam with said second light characteristic;
wherein the first light characteristic comprises a first light spectrum;
wherein the second light characteristic comprises a second light spectrum;
wherein a wavelength of at least one a dominant peak of the second light spectrum is at least 30 nm different from a wavelength of at least one dominant peak of the first light spectrum.

## Patentansprüche

1. Beleuchtungssystem (10) zum Beleuchten einer landwirtschaftlichen Umgebung (20), wobei das Beleuchtungssystem umfasst:
- eine erste Beleuchtungseinheit (1), die konfiguriert ist, um die landwirtschaftliche Umgebung mit einem ersten Licht (4) zu beleuchten, das eine erste Lichteigenschaft (5) aufweist;
- eine zweite Beleuchtungseinheit (2), die konfiguriert ist, um mindestens einen dynamischen Lichtstrahl (6, 6') zu projizieren, wobei jeder dynamische Lichtstrahl (6, 6') eine Strahldivergenz von weniger als 15 Grad aufweist und einen sich bewegenden Lichtfleck (7, 7') innerhalb der landwirtschaftlichen Umgebung erzeugt;
- eine Steuerung (3) zum Steuern der zweiten Beleuchtungseinheit (2), wobei die Steuerung konfiguriert ist zum: (i) Erhalten eines Signals (9), das die erste Lichteigenschaft (5) des ersten Lichts (4) angibt, (ii) Bestimmen einer zweiten Lichteigenschaft (8), die sich im Wesentlichen von der ersten Lichteigenschaft (5) unterscheidet, als Reaktion auf das Signal (9); (iii) Steuern der zweiten Beleuchtungseinheit (2), um den mindestens einen dynamischen Lichtstrahl (6, 6') mit der zweiten Lichtcharakteristik (8) zu projizieren;
wobei die erste Lichteigenschaft (5) ein erstes Lichtspektrum umfasst;
wobei die zweite Lichteigenschaft (8) ein zweites Lichtspektrum umfasst;
wobei sich eine Wellenlänge mindestens eines dominanten Peaks des zweiten Lichtspektrums um mindestens 30 nm von einer Wellenlänge mindestens eines dominanten Peaks des ersten Lichtspektrums unterscheidet

2. Beleuchtungssystem nach Anspruch 1, wobei die Steuerung konfiguriert ist, um die zweite Beleuchtungseinheit zu steuern, um den mindestens einen dynamischen Lichtstrahl gemäß einem vordefinierten und/oder spezifischen Bewegungsmuster zu projizieren;
wobei das vordefinierte Bewegungsmuster ein Pfad von einem ersten Bereich der landwirtschaftlichen Umgebung zu einem zweiten Bereich der landwirtschaftlichen Umgebung ist.

3. Beleuchtungssystem nach Anspruch 1, wobei die Steuerung konfiguriert ist, um die zweite Beleuchtungseinheit zu steuern, um den mindestens einen dynamischen Lichtstrahl gemäß einem zufälligen Bewegungsmuster oder einem pseudozufälligen Bewegungsmuster zu projizieren.

4. Beleuchtungssystem nach einem der vorstehenden Ansprüche, wobei die erste Lichteigenschaft eine erste Lichtfarbe umfasst, wobei die zweite Lichteigenschaft eine zweite Lichtfarbe umfasst, die sich im Wesentlichen von der ersten Lichtfarbe unterscheidet.

5. Beleuchtungssystem nach einem der vorstehenden Ansprüche, wobei die Steuerung konfiguriert ist, um das Signal, das die erste Lichteigenschaft des ersten Lichts angibt, drahtlos zu empfangen und die erste Beleuchtungseigenschaft aus dem Signal zu erhalten.

6. Beleuchtungssystem nach Anspruch 4, wobei die zweite Lichtfarbe und die erste Lichtfarbe komplementäre Lichtfarben sind.

7. Beleuchtungssystem nach einem der vorstehenden Ansprüche, wobei die erste Lichteigenschaft eine erste Lichtintensität umfasst, wobei die zweite Lichteigenschaft eine zweite Lichtintensität umfasst, wobei die zweite Lichtintensität höher als die erste Lichtintensität ist.

8. Beleuchtungssystem nach einem der vorstehenden Ansprüche, wobei die erste Beleuchtungseinheit konfiguriert ist, um die erste Lichteigenschaft zu bestimmen und das Signal, das die erste Lichteigenschaft des ersten Lichts angibt, an die Steuerung zu übermitteln.

9. Beleuchtungssystem nach einem der vorstehenden Ansprüche, wobei das erste Licht ein Lichtrezept für eine Aufzucht von Tieren, vorzugsweise für die Aufzucht von Geflügel, ist.

10. Beleuchtungssystem nach einem der vorstehenden Ansprüche, wobei die zweite Beleuchtungseinheit einen Laser, einen LED-Strahler oder einen Strahler mit hoher Etendue umfasst.

11. Beleuchtungssystem nach einem der vorstehenden Ansprüche, wobei die zweite Beleuchtungseinheit die Steuerung umfasst.

12. Beleuchtungssystem nach einem der vorstehenden Ansprüche, wobei die erste Lichteigenschaft eine erste Lichtpolarisation umfasst, wobei die zweite Lichteigenschaft eine zweite Lichtpolarisation umfasst, die sich im Wesentlichen von der ersten Lichtpolarisation unterscheidet.

13. Verfahren zum Beleuchten einer landwirtschaftlichen Umgebung, wobei das Verfahren umfasst:
- eine erste Beleuchtungseinheit, die die landwirtschaftliche Umgebung mit einem ersten Licht beleuchtet, das eine erste Lichteigenschaft aufweist;
- eine zweite Beleuchtungseinheit, die mindestens einen dynamischen Lichtstrahl projiziert, wobei jeder dynamische Lichtstrahl eine Strahldivergenz von weniger als 15 Grad aufweist und einen sich bewegenden Lichtfleck innerhalb der landwirtschaftlichen Umgebung erzeugt;
- eine Steuerung, die (i) ein Signal erhält, das die erste Lichteigenschaft des ersten Lichts angibt, (ii) eine zweite Lichteigenschaft bestimmt, die sich im Wesentlichen von der ersten Lichteigenschaft unterscheidet, als Reaktion auf das Signal, (iii) die zweite Beleuchtungseinheit steuert, um den mindestens einen dynamischen Strahl mit der zweiten Lichteigenschaft zu projizieren;
wobei die erste Lichteigenschaft ein erstes Lichtspektrum umfasst;
wobei die zweite Lichteigenschaft ein zweites Lichtspektrum umfasst;
wobei sich eine Wellenlänge mindestens eines dominanten Peaks des zweiten Lichtspektrums um mindestens 30 nm von einer Wellenlänge mindestens eines dominanten Peaks des ersten Lichtspektrums unterscheidet.

14. Geflügelstall, umfassend:
das Beleuchtungssystem nach einem der vorstehenden Ansprüche 1 bis 12; und
ein Geflügelgehege, das konfiguriert ist, um Geflügel zu umzäunen, wobei der mindestens eine dynamische Lichtstrahl, der durch die zweite Beleuchtungseinheit des Beleuchtungssystems projiziert wird, mindestens einen jeweiligen Lichtfleck innerhalb des Geflügelgeheges erzeugt.

15. Leuchte zum Projizieren mindestens eines Lichtstrahls innerhalb einer landwirtschaftlichen Umgebung, die mit einem ersten Licht beleuchtet wird, das eine erste Lichteigenschaft aufweist;
wobei die Leuchte ein Leuchtengehäuse, eine Beleuchtungseinheit und eine Steuerung umfasst;
wobei das Leuchtengehäuse die Beleuchtungseinheit und die Steuerung umfasst;
wobei die Beleuchtungseinheit konfiguriert ist, um mindestens einen dynamischen Lichtstrahl zu projizieren, wobei jeder dynamische Lichtstrahl eine Strahldivergenz von weniger als 15 Grad aufweist und einen sich bewegenden Lichtfleck innerhalb der landwirtschaftlichen Umgebung erzeugt;
wobei die Steuerung konfiguriert ist zum: (i) Erhalten eines Signals, das die erste Lichteigenschaft des ersten Lichts angibt, (ii) Bestimmen einer zweiten Lichteigenschaft, die sich im Wesentlichen von der ersten Lichteigenschaft unterscheidet, als Reaktion auf das Signal; (iii) Steuern der Beleuchtungseinheit, um den mindestens einen dynamischen Lichtstrahl mit der zweiten Lichteigenschaft zu projizieren;
wobei die erste Lichteigenschaft ein erstes Lichtspektrum umfasst;
wobei die zweite Lichteigenschaft ein zweites Lichtspektrum umfasst;
wobei sich eine Wellenlänge mindestens eines dominanten Peaks des zweiten Lichtspektrums um mindestens 30 nm von einer Wellenlänge mindestens eines dominanten Peaks des ersten Lichtspektrums unterscheidet.

## Revendications

1. Système d'éclairage (10) destiné à illuminer un environnement agricole (20), dans lequel le système d'éclairage comprend :
- une première unité d'éclairage (1) configurée pour illuminer l'environnement agricole avec une première lumière (4) ayant une première caractéristique de lumière (5) ;
- une seconde unité d'éclairage (2) configurée pour projeter au moins un faisceau de lumière dynamique (6, 6'), dans lequel chaque faisceau de lumière dynamique (6, 6') a une divergence de faisceau inférieure à 15 degrés et crée un point de lumière mobile (7, 7') au sein de l'environnement agricole :
- un dispositif de commande (3) pour commander la seconde unité d'éclairage (2), dans lequel le dispositif de commande est configuré pour : (i) obtenir un signal (9) indiquant la première caractéristique de lumière (5) de la première lumière 4), (ii) déterminer une seconde caractéristique de lumière (8) sensiblement différente de la première caractéristique de lumière (5) en réponse au signal (9) ; (iii) commander la seconde unité d'éclairage (2) pour projeter l'au moins un faisceau de lumière dynamique (6, 6') avec ladite seconde caractéristique de lumière (8) ;
dans lequel la première caractéristique de lumière (5) comprend un premier spectre de lumière :
dans lequel la seconde caractéristique de lumière (8) comprend un second spectre de lumière :
dans lequel une longueur d'onde d'au moins un pic dominant du second spectre de lumière diffère d'au moins 30 nm d'une longueur d'onde d'au moins un pic dominant du premier spectre de lumière.

2. Système d'éclairage selon la revendication 1,dans lequel le dispositif de commande est configuré pour commander la seconde unité d'éclairage afin de projeter l'au moins un faisceau de lumière dynamique selon un modèle de déplacement prédéfini et/ou spécifique ;
dans lequel ledit modèle de déplacement prédéfini est une voie allant d'une première région de l'environnement agricole à une seconde région de l'environnement agricole.

3. Système d'éclairage selon la revendication 1, dans lequel le dispositif de commande est configuré pour commander la seconde unité d'éclairage afin de projeter l'au moins un faisceau de lumière dynamique selon un modèle de déplacement aléatoire ou un modèle de déplacement pseudo-aléatoire.

4. Système d'éclairage selon l'une quelconque des revendications précédentes, dans lequel la première caractéristique de lumière comprend une première couleur de lumière, dans lequel la seconde caractéristique de lumière comprend une seconde couleur de lumière sensiblement différente de la première couleur de lumière.

5. Système d'éclairage selon l'une quelconque des revendications précédentes, dans lequel le dispositif de commande est configuré pour recevoir sans fil le signal indiquant la première caractéristique de lumière de la première lumière, et pour obtenir la première caractéristique d'éclairage à partir dudit signal.

6. Système d'éclairage selon la revendication 4, dans lequel la seconde couleur de lumière et la première couleur de lumière sont des couleurs de lumière complémentaires.

7. Système d'éclairage selon l'une quelconque des revendications précédentes, dans lequel la première caractéristique de lumière comprend une première intensité de lumière, dans lequel la seconde caractéristique de lumière comprend une seconde intensité de lumière, dans lequel la seconde intensité de lumière est supérieure à la première intensité de lumière.

8. Système d'éclairage selon l'une quelconque des revendications précédentes, dans lequel la première unité d'éclairage est configurée pour déterminer la première caractéristique de lumière et transmettre le signal indiquant la première caractéristique de lumière de la première lumière au dispositif de commande.

9. Système d'éclairage selon l'une quelconque des revendications précédentes, dans lequel la première lumière est une recette de lumière pour un élevage d'animaux, de préférence pour un élevage de volailles.

10. Système d'éclairage selon l'une quelconque des revendications précédentes, dans lequel la seconde unité d'éclairage comprend un laser, un projecteur à DEL, ou un projecteur à haute étendue.

11. Système d'éclairage selon l'une quelconque des revendications précédentes, dans lequel la seconde unité d'éclairage comprend le dispositif de commande.

12. Système d'éclairage selon l'une quelconque des revendications précédentes, dans lequel la première caractéristique de lumière comprend une première polarisation de lumière, dans lequel la seconde caractéristique de lumière comprend une seconde polarisation de lumière sensiblement différente de la première polarisation de lumière.

13. Procédé d'illumination d'un environnement agricole, dans lequel le procédé comprend :
- une première unité d'éclairage illuminant l'environnement agricole avec une première lumière ayant une première caractéristique de lumière ;
- une seconde unité d'éclairage projetant au moins un faisceau de lumière dynamique, dans lequel chaque faisceau de lumière dynamique a une divergence de faisceau inférieure à 15 degrés et crée un point de lumière mobile au sein de l'environnement agricole ;
- un dispositif de commande (i) obtenant un signal indiquant la première caractéristique de lumière de la première lumière, (ii) déterminant une seconde caractéristique de lumière sensiblement différente de la première caractéristique de lumière en réponse au signal, (iii) commandant la seconde unité d'éclairage pour projeter l'au moins un faisceau dynamique avec ladite seconde caractéristique de lumière ;
dans lequel la première caractéristique de lumière comprend un premier spectre de lumière ;
dans lequel la seconde caractéristique de lumière comprend un second spectre de lumière ;
dans lequel une longueur d'onde d'au moins un pic dominant du second spectre de lumière diffère d'au moins 30 nm d'une longueur d'onde d'au moins un pic dominant du premier spectre de lumière.

14. Poulailler comprenant :
le système d'éclairage selon l'une quelconque des revendications précédentes 1 à 12 ; et
un enclos avicole conçu pour contenir des volailles, dans lequel l'au moins un faisceau de lumière dynamique projeté par la seconde unité d'éclairage du système d'éclairage crée au moins un point de lumière respectif au sein de l'enclos avicole.

15. Luminaire destiné à projeter au moins un faisceau de lumière au sein d'un environnement agricole qui est illuminé par une première lumière ayant une première caractéristique de lumière ;
dans lequel le luminaire comprend un boîtier de luminaire, une unité d'éclairage et un dispositif de commande ;
dans lequel le boîtier de luminaire comprend l'unité d'éclairage et le dispositif de commande ;
dans lequel l'unité d'éclairage est configurée pour projeter au moins un faisceau de lumière dynamique, dans lequel chaque faisceau de lumière dynamique a une divergence de faisceau inférieure à 15 degrés et crée un point de lumière mobile au sein de l'environnement agricole ;
dans lequel le dispositif de commande est configuré pour : (i) obtenir un signal indiquant la première caractéristique de lumière de la première lumière, (ii) déterminer une seconde caractéristique de lumière sensiblement différente de la première caractéristique de lumière en réponse au signal ; (iii) commander l'unité d'éclairage pour projeter l'au moins un faisceau de lumière dynamique avec ladite seconde caractéristique de lumière ;
dans lequel la première caractéristique de lumière comprend un premier spectre de lumière ;
dans lequel la seconde caractéristique de lumière comprend un second spectre de lumière ;
dans lequel une longueur d'onde d'au moins un pic dominant du second spectre de lumière diffère d'au moins 30 nm d'une longueur d'onde d'au moins un pic dominant du premier spectre de lumière.
